# EUROPEAN PATENT SPECIFICATION

(11) **EP 4 488 537 B1**
(45) Date of publication and mention of the grant of the patent: **19.08.2026**
(21) Application number: 24181516.6
(22) Date of filing: 11.06.2024
(51) Int. Cl.: F16C 33/12, F16C 33/74, F16C 43/02

(54) **SYSTEMS AND METHODS FOR LIQUID METAL BEARING ASSEMBLY**
SYSTEME UND VERFAHREN FÜR FLÜSSIGMETALLLAGERANORDNUNG
SYSTÈMES ET PROCÉDÉS POUR ENSEMBLE PALIER À MÉTAL LIQUIDE

(30) Priority: 27.06.2023 US 202318342489
(43) Date of publication of application: 08.01.2025
(73) Proprietor: GE Precision Healthcare LLC, Waukesha, WI 53188 (US)
(72) Inventor: TRISCARI, Andrew T., West Milwaukee, 53219 (US); LUBAR, Eric J., West Milwaukee, 53219 (US); BERNDT, Kyle R., West Milwaukee, 53219 (US); HUNT, Ian S., West Milwaukee, 53219 (US)
(74) Representative: AWA Sweden AB

(56) References cited:
- DE-A1- 19 614 333
- JP-A- H07 208 454
- JP-A- H1 193 945
- US-A1- 2022 351 931
- US-B1- 11 017 977

## Description

### TECHNICAL FIELD

Embodiments of the subject matter disclosed herein relate to systems with liquid metal bearing assemblies and methods for assembling the liquid metal bearing assemblies.

### BACKGROUND

Liquid metal bearings are used in a variety of operating environments due to their increased longevity and ability to more effectively manage thermal loads, relative to roller bearings. Certain x-ray sources or x-ray tubes, for example, utilize liquid metal bearings owing at least in part to their durability and thermodynamic characteristics. However, asymmetric liquid metal distribution and gas formation in the bearing's liquid metal interface can occur in the bearing.

US 11 017 977 B1 discloses a liquid metal bearing comprising a liquid metal reservoir in the rotating part.

### SUMMARY

In one embodiment, a liquid metal bearing assembly is provided, comprising: a channel fluidly coupling a liquid metal reservoir to a gap between a sleeve and a shaft, wherein the sleeve and the shaft form the liquid metal reservoir; the channel having a first section sloped at a first angle and a second section sloped at a second angle, wherein the first angle is different from the second angle, and a curved transition section is positioned between the first section and the second section.

The above advantages and other advantages, and features of the present description will be readily apparent from the following Detailed Description when taken alone or in connection with the accompanying drawings. It should be understood that the summary above is provided to introduce in simplified form a selection of concepts that are further described in the detailed description. It is not meant to identify key or essential features of the claimed subject matter, the scope of which is defined uniquely by the claims that follow the detailed description.

### BRIEF DESCRIPTION OF THE DRAWINGS

The present disclosure will be better understood from reading the following description of non-limiting embodiments, with reference to the attached drawings, wherein below:
FIG. 1 shows a block schematic diagram of an exemplary x-ray imaging system, according to an embodiment;
FIG. 2 shows a pictorial view of a portion of an x-ray source, according to an embodiment;
FIG. 3 shows a liquid metal bearing assembly, according to an embodiment;
FIG. 4A shows a detailed view of a section of the liquid metal bearing assembly shown in FIG. 3, including a liquid metal reservoir;
FIG. 4B shows a first embodiment of a shaft of the liquid metal bearing assembly, shown in FIGS. 3 and 4A;
FIG. 5 shows another shaft for a liquid metal bearing assembly according to an embodiment;
FIG. 6 shows another shaft for a liquid metal bearing assembly, according to an embodiment;
FIG. 7 shows an additional embodiment of a shaft of the liquid metal bearing assembly;
FIG. 8 shows a detailed view of a section of the liquid metal bearing assembly shown in FIG. 3, including a pinning feature, according to an embodiment;
FIG. 9A and FIG. 9B show exemplary views of a sleeve of the liquid metal bearing assembly shown in FIG. 3, according to an embodiment;
FIG. 10 shows a second embodiment of the sleeve of the liquid metal bearing assembly, according to an embodiment;
FIG. 11A, FIG. 11B, and FIG. 11C show additional embodiments of the liquid metal bearing assembly, according to an embodiment;
FIG. 12 shows various views of the liquid metal bearing assembly including insertion of the shaft into the sleeve, according to an embodiment;
FIG. 13 is an exemplary method for assembly of a liquid metal bearing assembly, according to an embodiment;
FIG. 14 shows an additional embodiment of a shaft of the liquid metal bearing assembly;
FIG. 15 shows an additional embodiment of a shaft of the liquid metal bearing assembly;
FIG. 16 shows an additional embodiment of a shaft of the liquid metal bearing assembly;
FIG. 17 shows an additional embodiment of the liquid metal bearing assembly; and
FIG. 18 shows additional examples of a pinning feature of the liquid metal bearing assembly.

### DETAILED DESCRIPTION

The following description relates to various embodiments of systems (e.g., x-ray imaging systems) and liquid metal bearing assemblies deployed therein. The liquid metal bearings allow a desired level of liquid metal filling precision to be attained in the system. A reduction in gas suspended in the liquid metal and, in some cases, a more even liquid metal distribution in the bearing interface may be the outcome of the liquid metal filling precision. Consequently, friction coefficient reductions can be achieved, increasing bearing durability and longevity.

The disclosed liquid metal bearing assembly includes a shaft and a sleeve having a gap therebetween, where capillary action may be used to introduce a liquid metal such as gallium into the gap. The disclosure addresses current challenges related to manufacture of liquid metal bearings by encouraging good capillary wetting and liquid metal retention. This is achieved by introducing a gradual transition from a gallium reservoir into the gap (e.g., without sharp chamfer transitions). The gradual transition reduces difficulty of alignment of the shaft and the sleeve, enabling self-alignment during the assembly process, thereby increasing yield and reducing capacity constraints during manufacture. As another example, the shaft and sleeve configuration may reduce reliance on lubricants sometimes used during assembly that in some examples may contaminate the gallium and interfere with a lubricating ability of the gallium. Further, smooth transitions are used on an outer surface of a thrust bearing to encourage full wetting with liquid gallium. A strategically placed pinning feature may reduce an amount of gallium that may undesirably flow to lower rotating seals and reservoirs within the bearing outside of the journal surfaces. In this way, capillary force in the gap holds the gallium in the gap.

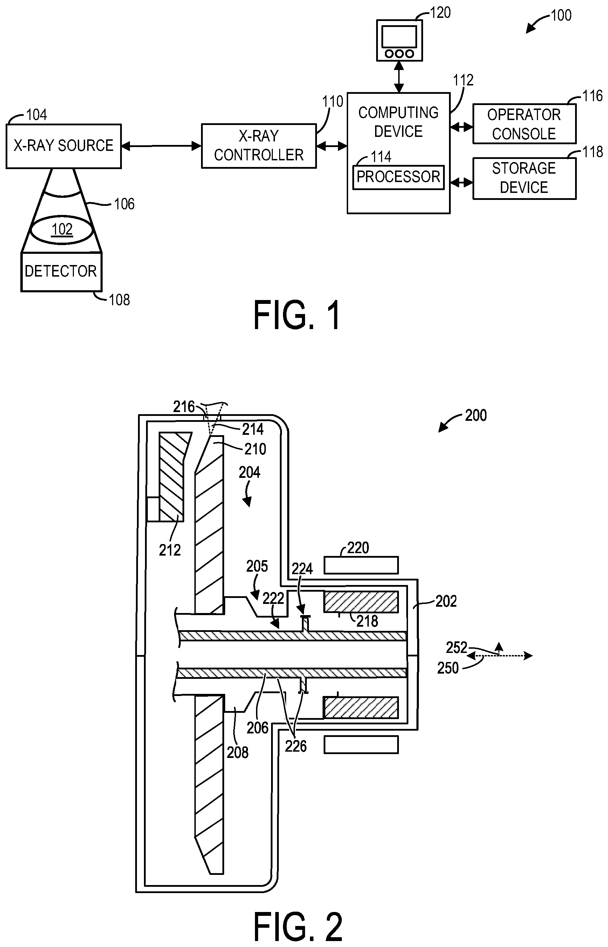

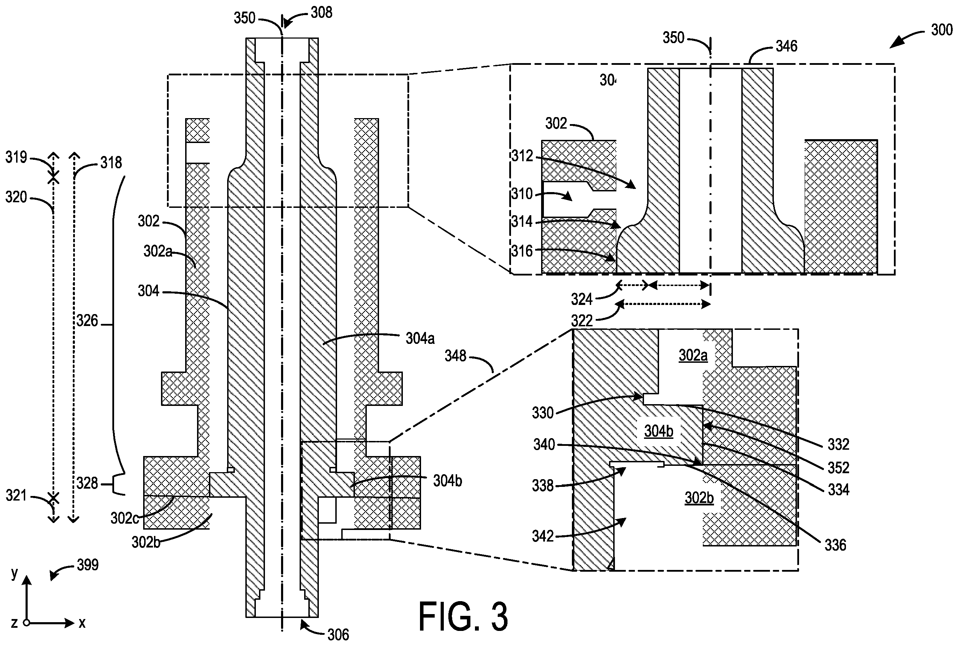

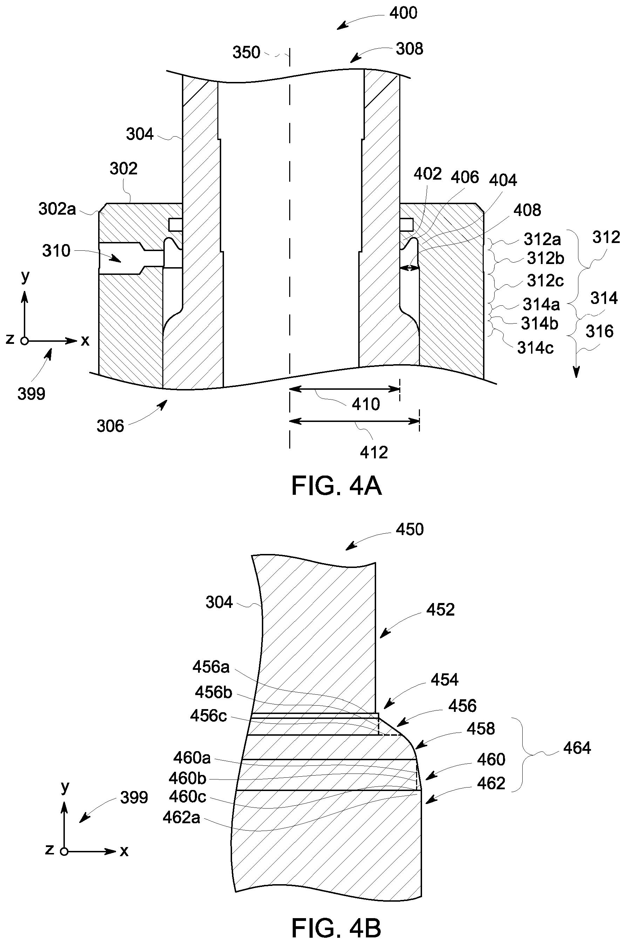

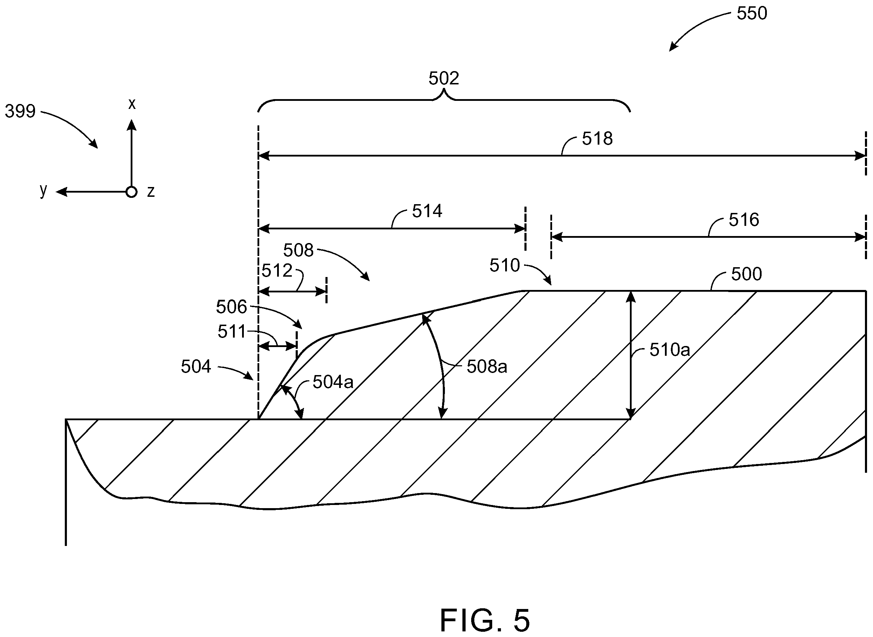

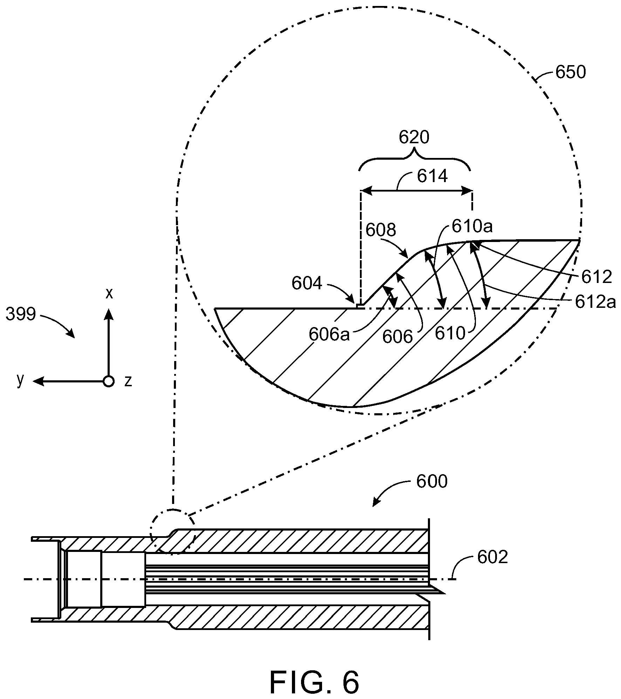

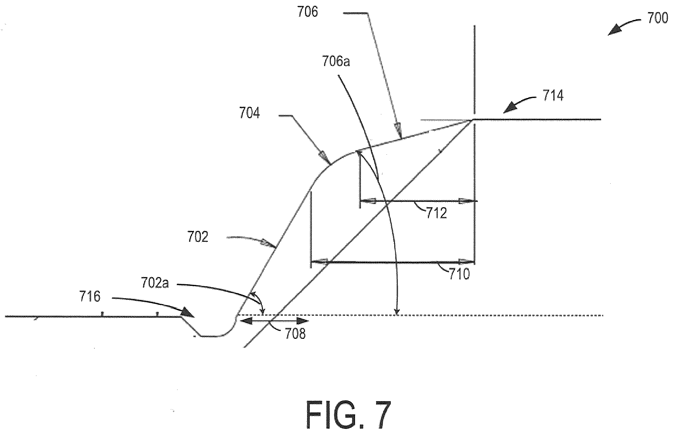

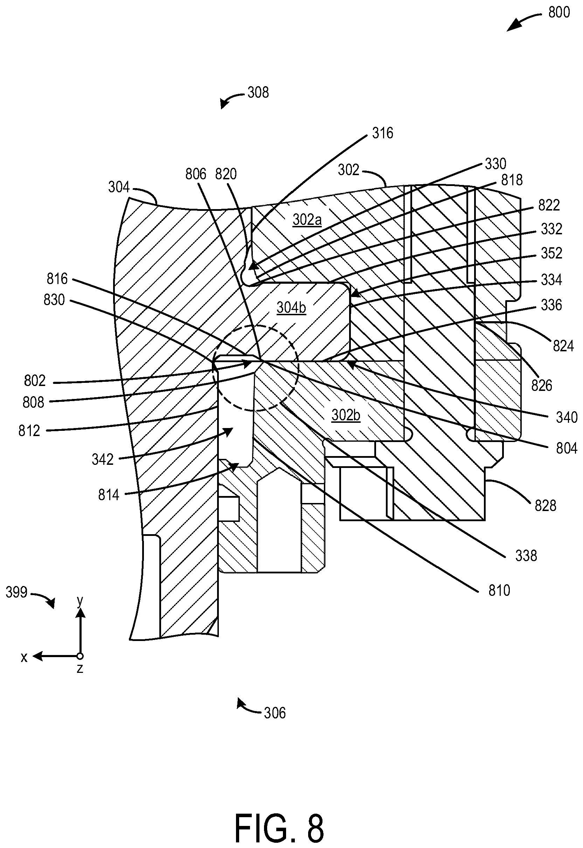

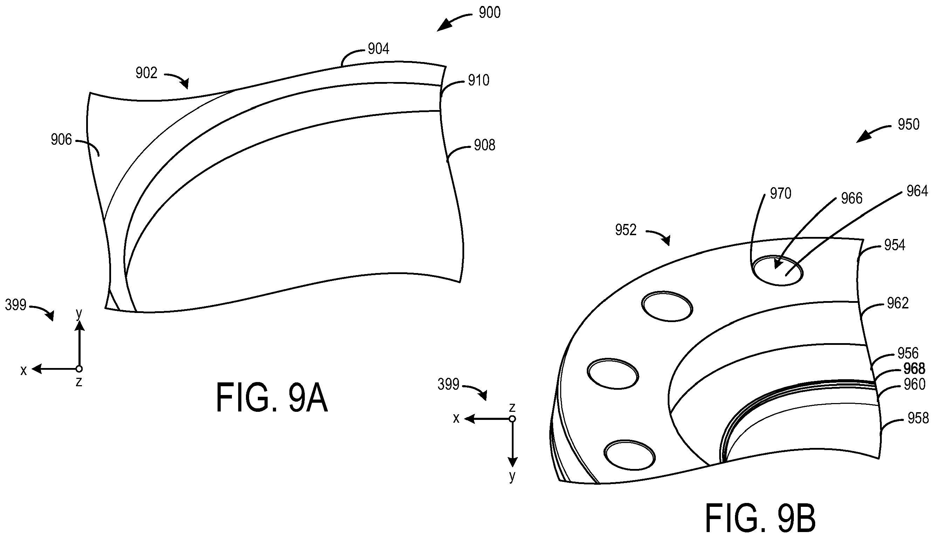

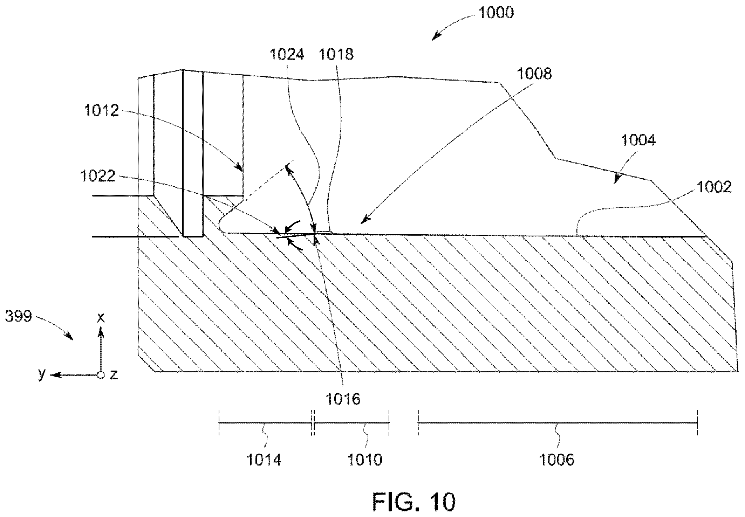

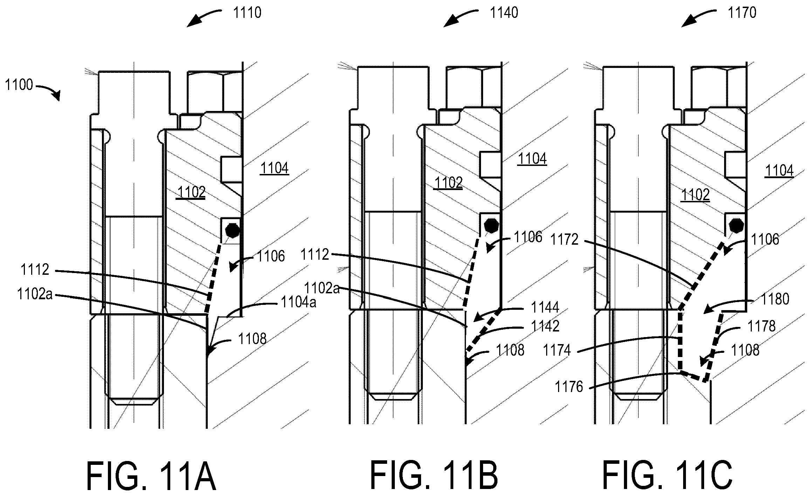

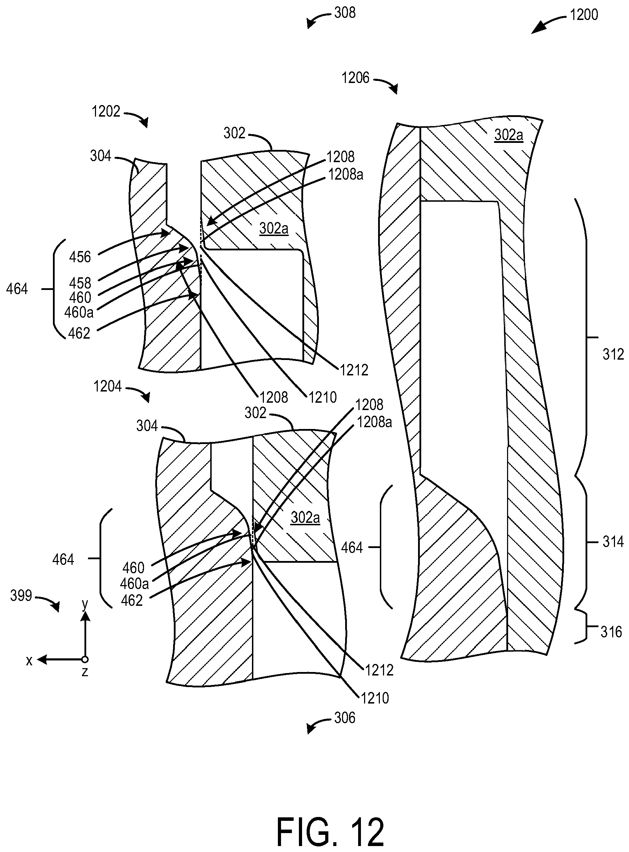

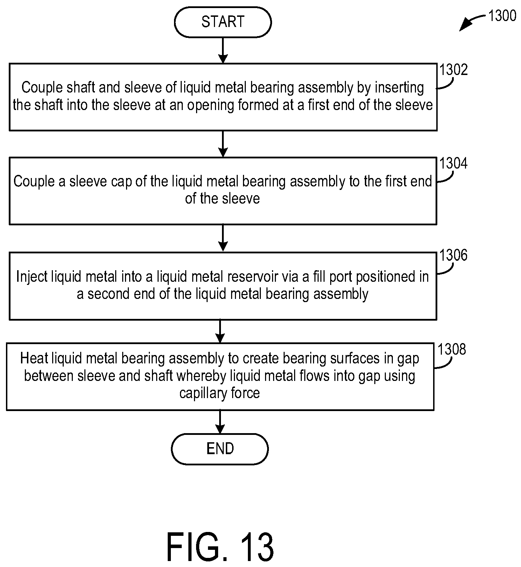

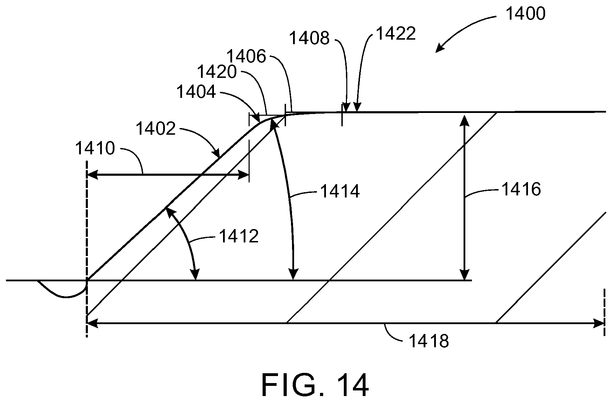

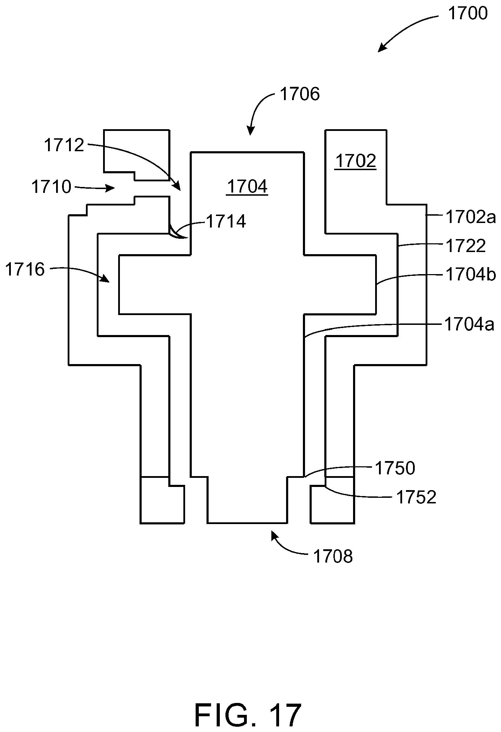

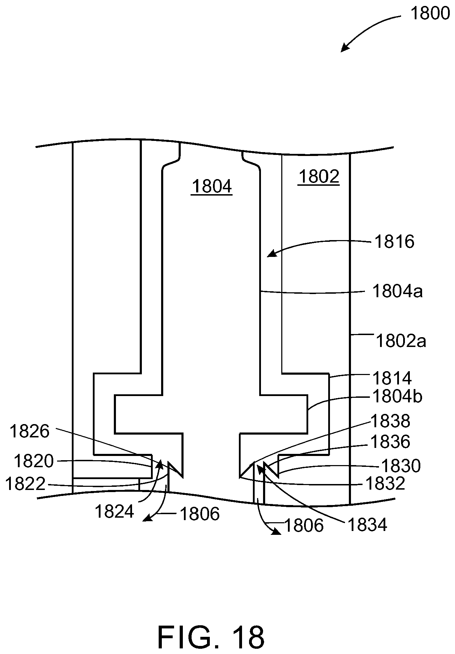

An x-ray imaging system is shown in FIG. 1 and includes an x-ray source (such as an x-ray tube) configured to generate x-rays, and an x-ray controller. An embodiment of an x-ray source is shown in FIG. 2, where the x-ray source is configured with a liquid metal bearing to provide anode rotation. FIG. 3 shows a first embodiment of a liquid metal bearing assembly and FIG. 4A illustrates a detailed view of a channel fluidly coupling a liquid metal reservoir to a gap of the liquid metal bearing assembly. FIG. 4B shows a detailed view of a shaft of the liquid metal bearing assembly, including angled surfaces that form the channel of FIG. 4A. FIG. 5 shows a detailed view of another shaft for a liquid metal bearing assembly. FIG. 6 shows a detailed view of another shaft for a liquid metal bearing assembly, different from the shaft illustrated in FIG. 5. FIG. 7 shows an additional embodiment of a shaft of the liquid metal bearing assembly having differently angled surfaces within a range of dimensions for the liquid metal bearing assembly. FIG. 8 shows a detailed view of a section of the liquid metal bearing assembly of FIG. 3, including a pinning feature. FIG. 9A and FIG. 9B show a first view and a second view, respectively, of a sleeve of the liquid metal bearing of FIG. 3. Additional configurations for the sleeve are illustrated in FIG. 10. FIG. 11A, FIG. 11B, and FIG. 11C show additional embodiments of the liquid metal bearing assembly. FIG. 12 shows an example assembly of the liquid metal bearing assembly including shaft insertion into the sleeve. FIG. 13 illustrates a method for operation of a system including a liquid metal bearing assembly. FIG. 14, FIG. 15, and FIG. 16 show additional embodiments of the shaft of the liquid metal bearing assembly, wherein each embodiment has differently angled surfaces within the range of dimensions for the liquid metal bearing assembly. FIG. 17 shows another example of the liquid metal bearing assembly. In the example, the channel and pinning features may be in an opposite orientation such that the fill port, angles forming the liquid metal reservoir and the entrance to the gap are on the seal side of the liquid metal bearing and the pinning feature is on the opposite end of the shaft with the sleeve. FIG. 18 shows additional examples of a pinning feature of the liquid metal bearing assembly.

FIGS. 2-10, FIG. 12, and FIGS. 14-16 are drawn to scale, although other relative dimensions may be used. FIGS. 2-10, FIG. 12, and FIGS. 14-18 show example configurations with relative positioning of the various components. If shown directly contacting each other, or directly coupled, then such elements may be referred to as directly contacting or directly coupled, respectively, at least in one example. Similarly, elements shown contiguous or adjacent to one another may be contiguous or adjacent to each other, respectively, at least in one example. As an example, components laying in face-sharing contact with each other may be referred to as in face-sharing contact. As another example, elements positioned apart from each other with only a space there-between and no other components may be referred to as such, in at least one example. As yet another example, elements shown above/below one another, at opposite sides to one another, or to the left/right of one another may be referred to as such, relative to one another. Further, as shown in the figures, a topmost element or point of element may be referred to as a "top" of the component and a bottommost element or point of the element may be referred to as a "bottom" of the component, in at least one example. As used herein, top/bottom, upper/lower, above/below, may be relative to a vertical axis of the figures and used to describe positioning of elements of the figures relative to one another. As such, elements shown above other elements are positioned vertically above the other elements, in one example. As yet another example, shapes of the elements depicted within the figures may be referred to as having those shapes (e.g., such as being circular, straight, planar, curved, rounded, chamfered, angled, or the like). Further, elements shown intersecting one another may be referred to as intersecting elements or intersecting one another, in at least one example. Further still, an element shown within another element or shown outside of another element may be referred as such, in one example.

The liquid metal bearing assembly includes a liquid metal interface positioned between a stationary component and a rotational component. The rotational component includes a liquid metal reservoir designed to contain a liquid metal and positioned radially inward from the liquid metal interface. The rotational component additionally includes a liquid metal passage extending between the liquid metal reservoir and the liquid metal interface. The rotational component may include an anti-wetting surface in the liquid metal passage.

Before further discussion of the liquid metal bearing assembly for machinability and liquid metal introduction, an example x-ray imaging system in which the liquid metal bearing assembly may be implemented is shown. FIG. 1 illustrates an x-ray imaging system 100 for generating x-rays. The x-ray imaging system 100 is configured as an x-ray imaging system that may be a computed tomography (CT) imaging system, a radiography imaging system, a fluoroscopy imaging system, a mammography imaging system, an interventional imaging system, a tomography system, etc. in FIG. 1. However, the x-ray imaging system 100 has applicability to fields beyond imaging, medical devices, and the like. For instance, the x-ray imaging system 100 may be deployed in crystallography systems, security scanners, industrial scanners, x-ray photography systems, and so on. In the x-ray imaging system example, the x-ray imaging system may be configured to image a subject 102 such as a patient, an inanimate object, one or more manufactured parts, and/or foreign objects such as implants, stents, and/or contrast agents present within the body.

The x-ray imaging system 100 may include a collector assembly having at least one x-ray source 104, such as an x-ray tube, configured to generate and project a beam of x-ray radiation 106. Specifically, in the illustrated embodiment, the x-ray source 104 is configured to project the x-ray radiation beams 106 towards a detector array 108 and through the subject 102. In some system configurations, the x-ray source 104 may project a cone-shaped x-ray radiation beam, which is collimated to lie within an X-Y-Z plane of a Cartesian coordinate system. However, other beam profiles and/or systems omitting the detector array have been envisioned. Each detector element of the array produces a separate electrical signal that is a measurement of the x-ray beam attenuation at the detector location.

Although FIG. 1 depicts only a single x-ray source 104 and detector array 108, in certain embodiments, multiple x-ray sources, and/or detectors may be employed to project a plurality of x-ray radiation beams and detect said beams. For instance, in the CT machine use-case example, multiple detectors may be used in tandem with the x-ray sources to acquire projection data at different energy levels corresponding to the subject.

The x-ray imaging system 100 may further include an x-ray controller 110 configured to provide power and timing signals to the x-ray source 104. It will be understood that that system may also include a data acquisition system configured to sample analog data received from the detector elements and convert the analog data to digital signals for subsequent processing.

In certain embodiments, the x-ray imaging system 100 may further include a computing device 112 having a processor 114 and controlling system operations based on operator input. The computing device 112 receives the operator input, for example, including commands and/or scanning parameters via an operator console 116 operatively coupled to the computing device 112. The operator console 116 may include a keyboard, a touchscreen, and/or other suitable input device allowing the operator to specify the commands and/or scanning parameters.

Although FIG. 1 illustrates only one operator console 116, more than one operator console may be included in the x-ray imaging system 100, for example, for inputting or outputting system parameters, requesting examinations, plotting data, and/or viewing images. Further, in certain embodiments, the x-ray imaging system 100 may be coupled to multiple displays, printers, workstations, and/or similar devices located either locally or remotely, for example, and connected via wired and/or wireless networks. In one embodiment, a display 120 may be in electronic communication with the computing device 112 and is configured to display graphical interfaces indicating system parameters, control setting, imaging data, etc.

In one example, the computing device 112 stores the data in a storage device 118. The storage device 118, for example, may include a hard disk drive, a floppy disk drive, a compact disk-read/write (CD-R/W) drive, a Digital Versatile Disc (DVD) drive, a flash drive, and/or a solid-state storage drive.

Additionally, the computing device 112 provides commands to the x-ray controller 110 and other system components for controlling system operations such as x-ray beam formation, data acquisition and/or processing, etc. Thus, in certain embodiments, the computing device 112 controls system operations based on operator input. To elaborate, the computing device 112 may use the operator-supplied and/or system-defined commands and parameters to operate an x-ray controller 110, which in turn, may control the x-ray source 104. In this way, the intensity and timing of x-ray beam generation may be controlled. It will also be understood that the rotational speed of a sleeve in the x-ray source may be adjusted by the computing device 112 in conjunction with the x-ray controller 110. The sleeve may be a rotational element of a liquid metal bearing assembly, as described herein in detail.

Various methods and processes may be stored as executable instructions in non-transitory memory on a computing device (or controller) in x-ray imaging system 100. In one embodiment, the x-ray controller 110 may include the executable instructions in non-transitory memory, and may apply the methods to control the x-ray source 104. In another embodiment, computing device 112 may include the instructions in non-transitory memory, and may relay commands, at least in part, to the x-ray controller 110, which in turn adjusts the x-ray source output.

FIG. 2 shows a detailed embodiment of a portion of an x-ray source, such as an x-ray tube 200. The x-ray tube 200 shown in FIG. 2 serves as an example of the x-ray source 104 depicted in FIG. 1. As such, the x-ray source shown in FIG. 2 as well as the other x-ray source embodiments described herein may include functional and/or structural features from the x-ray source 104, shown in FIG. 1, or vice versa. Furthermore, alternate embodiments combining features from one or more of the systems have also been envisioned. A rotational axis 250 and a radial axis 252 are provided in FIG. 2 for reference. It will be understood that a radial axis is any axis perpendicular to the rotational axis 250.

The x-ray tube 200 includes a housing 202 having a low-pressure enclosure 204 (e.g., vacuum enclosure) formed therein. It will be understood that a low-pressure enclosure infers a comparatively low-pressure relative to atmospheric pressure. As such, the pressure in the enclosure may be less than atmospheric pressure.

The x-ray tube 200 includes a liquid metal bearing assembly 205 with a rotating member, herein a rotational component 208, and a stationary member, herein a stationary component 206. In one example, the rotational component 208 and the stationary component 206 may include wetting and anti-wetting surfaces. In the illustrated embodiment, the rotational component 208 is a sleeve and the stationary component 206 is a shaft. However, embodiments in which the sleeve is stationary and the shaft rotates have been contemplated. It will be understood that the motion denoted by the descriptors stationary and rotational denote the relative motion between the components. However, in certain use-case examples, the x-ray tube may be integrated into a moving structure. For instance, in the CT imaging system use-case, the x-ray tube may be integrated into a rotating gantry. As such, in a smaller scale frame of reference, the shaft is stationary relative to the sleeve but in a larger scale frame of reference, both components exhibit similar rotational motion in the gantry. However, in alternate use-case scenarios, the x-ray tube may be integrated into a stationary structure with respect to the larger scale frame of reference. It will also be appreciated that the liquid metal bearing assembly described in detail herein may be deployed in alternate types of systems utilizing liquid metal bearings, in some instances.

A rotor 218 and a stator 220 are also provided in the x-ray tube 200. The rotor 218 is coupled to the rotational component 208 and is designed to impart rotational motion thereto. The stator 220 is shown positioned external to the low-pressure enclosure 204. However, other suitable stator locations have been envisioned. Typically, the rotor and stator can include windings, magnets, electrical connections, etc., electromagnetically interacting to generate rotor rotation responsive receiving control commands, from, for example, the x-ray controller 110 shown in FIG. 1.

The x-ray tube 200 further includes an anode 210 and a cathode 212. The anode 210 is part of an anode assembly. The anode 210 is coupled to and supported by the rotational component 208, which may impart rotation of the anode 210 during generation of an x-ray beam. The cathode 212 is part of a cathode assembly and may receive signals from a controller, such as the x-ray controller 110 shown in FIG. 1, to generate an electron beam directed toward a surface of the anode 210. An x-ray beam 214 is generated when the electron beam from the cathode 212 strikes the anode 210. The x-rays are emitted through an x-ray window 216 in the housing 202.

Turning to the liquid metal bearing assembly 205, the assembly 205 includes a plurality of liquid metal bearings. In the illustrated embodiment, the liquid metal bearing assembly 205 may include a liquid metal journal bearing 222 and a liquid metal thrust bearing 224. The liquid metal journal bearing 222 is designed to support radial loads and the liquid metal thrust bearing 224 is designed to support axial loads. In this way, loads on the sleeve (e.g., the rotational component 208) may be managed to provide efficient sleeve rotation.

Each of the bearings of the liquid metal bearing assembly 205 include an interface 226 in which liquid metal acts as a lubricant and also supports radial and axial loads. The thickness of the interface may be selected based on factors such as the type of liquid metal used in the bearing, manufacturing tolerances of the components, expected system operating temperature, and so on. Thus, in one use-case example the thickness of the liquid metal interface may be on the order of 5 microns (µm) to 40 µm. The thickness of the liquid metal interface of the liquid metal journal bearing 222 may be in the direction of the radial axis 252, and the thickness of the liquid metal interface of the liquid metal thrust bearing 224 may be in the direction of the radial axis 252 and in the direction of the rotational axis 250. The liquid metal used as the working fluid in the bearing assembly may include gallium, tin, indium, combinations thereof, and so on. The embodiments of a liquid metal bearing assembly described herein with respect to FIGS. 3-11 may use gallium as the liquid metal lubricant.

FIG. 3 depicts an embodiment of a liquid metal bearing assembly 300. In some examples, the liquid metal bearing assembly 300 may be similar to, or the same as, the liquid metal bearing assembly 205, depicted in FIG. 2. As such, features from the liquid metal bearing assembly 205 and more generally, the x-ray tube 200 may be included in the liquid metal bearing assembly 300 as well as the other liquid metal bearing assembly embodiments described herein. Axes 399 are provided in FIG. 3, as well as FIGS. 4A-6, 8-10, and 12 for purposes of comparison. In the examples shown, the y-axis is a vertical axis, the x-axis is a lateral axis (e.g., horizontal axis) perpendicular to the y-axis, and the z-axis is a longitudinal axis perpendicular to each of the x-axis and the y-axis. During conditions in which the liquid metal bearing assembly 300 is mounted to an x-ray source of an x-ray imaging system, such as the x-ray imaging system 100 described above with reference to FIG. 1, the x-axis is parallel to a direction of gravity. FIG. 3 includes a first detailed view 346 and a second detailed view 348.

The liquid metal bearing assembly 300 includes a rotational component which may be referred to herein as a sleeve 302, and a stationary component which may be referred to herein as a shaft 304. The sleeve 302 and the shaft 304 may be coupled such that the sleeve 302 is rotatable relative to the shaft 304. Each of the sleeve 302 and the shaft 304 are configured with structures which form a liquid metal flow path during conditions in which the liquid metal bearing assembly 300 is assembled, as shown in FIG. 3 (e.g., the shaft 304 enclosed in the sleeve 302). The liquid metal flow path may include a fill port 310, a liquid metal reservoir 312 (e.g., a lubricant reservoir), a channel 314, and a gap 316. The fill port 310 may be machined as part of the sleeve 302 or formed together with the sleeve 302 (e.g., molded together) and be positioned radially distant from a bearing centerline. For example, the bearing centerline may be a central axis of rotation 350, similar to, or the same as, the rotational axis 250 of FIG. 2. The fill port may be positioned a first radial distance 322 from the central axis of rotation 350 (e.g., offset from the central axis of rotation 350 in a radial direction of the central axis of rotation 350). In some examples, during assembly of the liquid metal bearing assembly 300, the fill port may be fitted with a plug (not shown) following introduction of liquid metal into the liquid metal reservoir 312. In some embodiments, the liquid metal bearing assembly 300 may be configured with more than one fill port. For example, the liquid metal bearing assembly 300 may include the fill port 310 on a first radial side of the sleeve 302 and further include a second fill port (not shown) directly opposite the fill port 310, with respect to a central axis of rotation 350 (e.g., the fill port 310 may be arranged opposite to the second fill port across the central axis of rotation 350). As another example, the second fill port may be located at a different axial position from the first fill port or parallel to the bearing axis at different radial distances from the central axis of rotation 350. In some embodiments, the fill port 310 may have a wetting or anti-wetting coating.

The liquid metal reservoir 312 may extend annularly around the shaft 304 as a second radial distance 324 between the shaft 304 and the sleeve 302. The liquid metal reservoir 312 may be fluidically coupled to the fill port 310 and to the channel 314. Each of the liquid metal reservoir 312 and the gap 316 may hold an approximately equal volume of liquid metal. As one example, the liquid metal reservoir 312 and gap 316 may each contain an equal volume of liquid gallium. As another example, the liquid metal reservoir 312 and the gap 316 may hold more liquid gallium than the volume to fill the journal gap. As one non-limiting example, the liquid metal may be approximately 5 grams. The fill port 310 coupled to the liquid metal reservoir 312 may increase a useable volume of the liquid metal reservoir 312. For example, the fill port 310 may increase the liquid metal capacity. Increasing an amount of liquid metal that may be held by the liquid metal reservoir 312 may increase a long-term tolerance of the bearing to undesired liquid metal flows as well as increase desirable bearing performance, for example, maintenance of a continuous bearing surface, as further described herein.

The liquid metal flow path including the liquid metal reservoir 312, the channel 314, and the gap 316 may have an annular configuration between the sleeve 302 and the shaft 304. A sloping diameter (e.g., tapering) of the shaft 304 and the sleeve 302 provides a narrowing in width (e.g., between the shaft 304 and the sleeve 302) of the liquid flow path from the liquid metal reservoir 312 to the gap 316. Described another way, at the channel 314, a diameter of the shaft 304 may increase, relative to a diameter of the shaft 304 at the liquid metal reservoir 312, and a diameter of the interior of the sleeve 302 may decrease, relative to a diameter of the interior of the sleeve 302 at the liquid metal reservoir 312, thus decreasing an overall width of the liquid metal flow path between the shaft 304 and the sleeve 302 in a direction from a second end 308 toward a first end 306 of the shaft.

During assembly of the liquid metal bearing assembly 300, liquid metal may be injected or otherwise inserted into the liquid metal reservoir 312 via the fill port 310. The liquid metal may be funneled by the channel 314 to the gap 316. A width of the gap 316 may be less than a width of a bead of liquid metal; therefore, the liquid metal may not passively flow into the gap 316. The liquid metal wets the bearing surfaces by allowing capillary forces to pull the liquid metal from the channel 314 into the gap 316. The liquid metal may thus coat surfaces of bearings of the liquid metal bearing assembly 300 (e.g., a liquid metal journal bearing and/or a liquid metal thrust bearing) to create bearing surfaces which have a continuous layer of liquid metal extending between the sleeve 302 and the shaft 304. This may provide smooth, uninterrupted rotation of the sleeve 302 relative to the shaft 304, such as during operation of an x-ray tube to generate x-ray beams, as described with respect to FIGS. 1 and 2. The liquid metal bearing assembly 300 may further include seals in a lower region of the first end 306 of the liquid metal bearing assembly 300, designed to reduce an amount of undesired liquid metal flows from the bearings. For example, the seals may be rotating seals, compression seals, and so on. The seals may impede liquid metal flow in an axial direction (e.g., along the central axis of rotation 350) away from an anode, such as the anode 210 shown in FIG. 2.

The sleeve 302 of the liquid metal bearing assembly 300 may be formed of a first body 302a and a second body 302b, where separation of the first body 302a and the second body 302b is shown by an interface 302c. During assembly of the liquid metal bearing assembly 300, the shaft 304 is inserted into the first body 302a of the sleeve 302 from the first end 306. A body 304a of the shaft 304 is configured with a flange 304b which radially extends from a body 304a of the shaft 304. The first body 302a of the sleeve 302 is configured with a complementary section 352 in which the flange 304b may be positioned. When the flange 304b is positioned in the complementary section 352 (e.g., as shown in FIG. 3), the second body 302b of the sleeve 302 is coupled to the first body 302a at the first end 306 to enclose the shaft 304 in the sleeve 302. The first body 302a and the second body 302b may be coupled via bolts, welding, other fasteners, etc. As one example, the second body 302b may be a sleeve cap.

The first body 302a of the sleeve 302 is configured with an annular cutout in which the shaft 304 is positioned when the liquid metal bearing assembly 300 is assembled. When the shaft 304 is positioned in the annular cutout of the sleeve 302, a liquid metal trap may be formed therebetween, which extends a length 318 of the first body 302a, and includes the complementary section in which the flange 304b of the shaft 304 is positioned. The liquid metal trap may have angled walls in a first region 319 of the length 318 such that a first diameter of the first region 319 gradually increases down the y-axis from the second end 308. The liquid metal trap is further configured with a second diameter in a second region 320 that decreases down the y-axis from the channel 314 until a third region 321 of the length 318, where the third region 321 is the complementary section. The third diameter of the third region 321 may be greater than the second diameter of the second region 320. In other examples, the third diameter of the third region 321 may be less than the second diameter of the second region 320. Transitions between the first diameter, the second diameter, and the third diameter are further discussed with respect to FIGS. 4A-4B and 8-11.

The liquid metal reservoir 312 is in the first region 319 of the trap formed by the sleeve 302 and the shaft 304. A distance between the sleeve 302 and the shaft 304 in the first region 319 is greater than a distance between the sleeve 302 and the shaft 304 at the gap 316 and the channel 314. The liquid metal reservoir 312 may have a first volume and the gap 316 may have a second volume, where the second volume is greater than or equal to the first volume. The liquid metal reservoir 312 may be fluidically coupled to the gap 316 by the channel 314. As further described herein, the channel 314 includes a first section sloped at a first angle, a second section sloped at a second angle, and a curved transition coupling the first section to the second section. The curved transition is not straight, nor does it include any straight sections, in an example. The first angle and the second angle are different.

A portion of the gap 316 may be arranged at a third angle, with the third angle being different relative to the first angle and the second angle. The second section of the channel 314 fluidically couples the channel 314 to the gap 316. The gap 316 may have a width between the sleeve 302 and the shaft 304, which is continuous along a length of a liquid metal journal bearing 326 (e.g., the liquid metal journal bearing 222 of FIG 2). In other embodiments, the gap 316 may have different widths along the length of the liquid metal journal bearing 326. In the illustrated example, the liquid metal journal bearing 326 and a liquid metal thrust bearing 328 (e.g., the liquid metal thrust bearing 224 of FIG 2) may have a continuous layer of liquid metal extending therewithin and therebetween. In one example, at a transition between the liquid metal journal bearing 326 and the liquid metal thrust bearing 328, the structures of the sleeve 302 and the shaft 304 may form a wetting reservoir 330, which couples the gap 316 to a liquid metal interface 340 of the liquid metal thrust bearing 328. In one example, the liquid metal interface 340 may be the fluid around the liquid metal thrust bearing 328 extending along a first side 332, a second side 334, and a third side 336 of the flange 304b of the liquid metal thrust bearing 328. The third side 336 of the flange 304b may be configured with a pinning feature 338. For example, a first angle of the flange 304b and a second angle of the shaft 304 in the complementary section 352 may be in contact to form a sharp angle extending annularly therebetween. The pinning feature 338 may thus provide fluid pinning and, along with capillary forces, prevent liquid metal from flowing into a gas reservoir, herein an expansion chamber 342, formed by the second body 302b of the sleeve 302 and the shaft 304. In this way, the liquid metal reservoir 312 is fluidically separated from the expansion chamber 342 by the pinning feature 338. Further detail regarding the liquid metal reservoir 312, the channel 314, and the gap 316 are described with respect to FIGS. 4A-4B. Further detail regarding the pinning feature 338 and expansion chamber 342 are described with respect to FIG. 8.

A detailed view 400 of a section of the liquid metal bearing assembly 300 is depicted in FIG. 4A. The detailed view 400 is similar to first detailed view 346, including additional details of the liquid metal reservoir 312, the channel 314, and the gap 316. In one example, the sleeve 302 and the shaft 304 include structures having geometry designed to flow liquid metal into the gap 316 during field assembly of the liquid metal bearing assembly 300. The geometry may result in a reduction in gas formation in the interface (e.g., interface 226 in FIG. 2) between the sleeve 302 and shaft 304 where liquid metal acts as a lubricant and provides structural support. The geometry may also result in more even liquid metal distribution across the bearing assembly. Further, the geometry may be such that a sufficient amount of liquid metal may flow into the bearing journal during assembly, reducing underfilling, and voids in the journal. The reservoir is sized such that the full bearing capillary gap may be filled without spilling out of the fill port or rotating seals.

In one example, the liquid metal reservoir 312 widens in the direction from the second end 308 towards the first end 306. The liquid metal reservoir 312 includes a first section 312a that may be narrower than a second section 312b and a third section 312c that may be wider than the second section 312b. The second section 312b may be the portion of the void opposite the fill port 310, with the first section 312a above the second section, and the third section 312c below the second section 312b. The widening of the liquid metal reservoir 312 is formed by an angling of the first body 302a of the sleeve 302. In the first section 312a, an interior portion 402 of the first body 302a and an exterior portion 404 meet at an angle 406 that in the example may be approximately 45 degrees. Also, in the first section 312a, the interior portion 402 of the sleeve 302 narrows in the direction from the second end 308 towards the first end 306. From the angle 406, the first section 312a to the second section 312b of the liquid metal reservoir 312 increases in radial width. At a transition between the second section 312b and the third section 312c, the liquid metal reservoir 312 increases to a first radial width 408. In one example, the first radial width 408 may hold a liquid metal bead with a diameter larger than a diameter of the channel 314 (as further described herein) in close proximity to the channel 314 for encouraging capillary flow during field assembly.

The channel 314 fluidly couples the liquid metal reservoir 312 to the gap 316 between the sleeve 302 and the shaft 304. In one example, the channel 314 tapers in the direction from the second end 308 towards the first end 306. The tapering is formed by a widening of the shaft 304. For example, the shaft 304 may have a second radial width 410 within the region of the liquid metal reservoir 312. The shaft 304 widens within the region of the channel 314 to a third radial width 412 within the region of the gap 316. The widening of the shaft 304 from the second radial width 410 to the third radial width 412 includes a first angle, a second angle, a curved transition between the first angle and second angle, and a third angle. Angles of the shaft 304 are described in 4B.

The angled surfaces of the shaft 304 with respect to the sleeve 302 influence the geometry of the channel 314. The angled surfaces are described below in FIG. 4B. In one example, the channel 314 includes a first section 314a sloped at the first angle, a second section 314c sloped at the second angle, different from the first angle, and a curved transition 314b between the first section 314a and the second section 314c. The gap 316 may be sloped at the third angle. In one example, the angled surfaces of the shaft 304 form the channel 314 in such a way that the liquid metal bead is held above the gap 316 during field assembly. When the liquid metal bead is heated during use, the tapering geometry the channel 314 and the gap 316 further increases capillary flow during assembly. For example, the first section 314a is sized such that liquid metal may be in contact with the second section 314c, allowing capillary flow. Thus, liquid metal entering into the gap 316 (e.g., journal) may be controlled with specific wetting characteristics of the shaft chamfer (e.g., transitional edge between two faces of an object).

A detailed view 450 of a section of the liquid metal bearing assembly 300 is depicted in FIG. 4B. The detailed view 450 includes additional details of the shaft 304. In one example, the shaft 304 includes angled surfaces designed to flow liquid metal into the gap 316 during field assembly of the liquid metal bearing assembly 300. The geometry may result in a reduction in gas formation in the bearing journal, e.g., gap 316, where liquid metal acts as a lubricant and provides structural support. The geometry may also result in more even liquid metal distribution across the assembly. The geometry of the structures also facilitates auto-alignment of the shaft and the sleeve during field assembly, increasing manufacturing efficiency.

The shaft 304 includes an upper section 452. The upper section 452 of the shaft 304 may be adjacent to the liquid metal reservoir 312 (e.g., in FIG. 3, etc.). A step 454 may be located below the upper section 452. In one example, step 454 may be a grinding step. Below the step 454, the shaft 304 is formed with a gradual transition 464. The gradual transition 464 comprises a first section 456, a curved transition 458, a second section 460, and a third section 462. In one example, the gradual transition 464 may be adjacent to the channel 314 and the transition between the channel 314 and the gap 316 (e.g., in FIG. 3, etc.).

In one example, the first section 456 may be sloped at a first angle 456a ranging from a lower boundary of 45° and an upper boundary of 60°. The first section 456 may have a first axial length 456b ranging from a lower boundary of 0.5 mm to an upper boundary of 3 mm. Herein axial lengths are in the direction of (e.g., parallel with) the rotational axis. The first section 456 may have a first radial change 456c ranging from a lower boundary of 1 mm to an upper boundary of 2 mm. In one example, the curved transition 458 may range in length from 4mm to 9 mm. In one example, the second section 460 may be sloped a second angle 460a ranging from a lower boundary of 0.5° to an upper boundary of 15°. The second section 460 may have a second axial length 460b ranging from a lower boundary of 1.5 mm to an upper boundary of 7 mm. The second section 460 may have a second radial change 460c ranging from 0.5 mm to 1 mm. In one example, the third section 462 may be sloped at a third angle 462a ranging from a lower boundary of 0 degrees to an upper boundary of 2.5 degrees. The third section 462 may be the length of the journal of the assembly. In one example, the radius at the first radial change 456c is smaller than the radius at the second radial change 460c with the difference being equal to the length of the second radial change 460c.

In one example, the first angle 456a, being greater than the second angle 460a, acts as a funnel to move liquid metal from the liquid metal reservoir 312 to the channel 314 and into the gap 316 (e.g., the bearing journal). The size of the first angle 456a allows the bead of liquid metal to fit further into the channel 314 thereby reducing the distance between the channel 314 and the gap 316 for increased capillary flow. The second angle 460a and corresponding sleeve 302 geometry allows for auto-alignment during assembly. Such shaft and sleeve geometry is described in more detail in FIG. 12.

FIG. 5 shows a detailed view 550 of another embodiment of a shaft 500 that may be implemented in a liquid metal bearing assembly, such as the liquid metal bearing assembly 300 of FIG. 3. The shaft 500 is relatively similar in form and function to the shaft 304 shown in FIGS. 3, 4A, and 4B. In one example, the dimensions of the shaft 500, and the additional shaft embodiments illustrated below, may be within the range of dimensions described with respect to FIGS. 3, 4A-4B.

For example, the shaft 500 includes a gradual transition 502 including a first section 504 sloped at a first angle 504a, a second section 508 sloped at a second angle 508a, a curved transition 506 between the first section 504 and the second section 508, and a third section 510 sloped at a third angle 510a. The first angle 504a, the second angle 508a, and a third angle 510a of the shaft at a gap (e.g., the gap 316 of FIG. 3) may be different in the embodiment of the shaft 500 compared to the embodiment of the shaft 304 of FIGS. 3-4B. In one example, the first angle 504a may be greater than the first angle 456a illustrated with respect to FIG. 4B. In one example, the second angle 508a may be greater than the second angle 460a illustrated with respect to FIG. 4B.

The first section 504 may have a first axial length 511. The curved transition 506 and the first section 504 may together have a second axial length 512. The first section 504, curved transition 506, and second section 508 may together have a third axial length 514. The third section 510 may have a fourth axial length 516. The first section 504, curved transition 506, second section 508, and third section 510 may together have a fifth axial length 518. In the example, the first axial length 511 of shaft 500 may be similar to the range of lengths described with respect to the first axial length 456b of shaft 304 in FIG. 4B. In the example, the first axial length 511 may be shorter than the first axial length 456b of shaft 304. In other examples, the first axial length 511 may be greater than the first axial length 456b. Similarly, the difference between the second axial length 512 and the third axial length 514 may be similar to the range of lengths described for the second axial length 460b of shaft 304 in FIG. 4B.

FIG. 6 shows yet another embodiment of a shaft 600 which may be implemented in a liquid metal bearing assembly, such as the liquid metal bearing assembly 300 of FIG. 3. The shaft 600 is relatively similar in form and function to the shaft 304 shown in FIGS. 3, 4A, and 4B and shaft 500 shown in FIG. 5. An axis of rotation 602 is provided in FIG. 6 for reference. The axis of rotation 602 may be the same or similar to the axis of rotation 350 in FIG. 3, and 4A.

FIG. 6 includes a detailed view 650 of the shaft 600 including a gradual transition 620. The gradual transition 620 includes a first section 606 sloped at a first angle 606a, a second section 610 sloped at a second angle 610a, and a third section 612. A curved transition 608 may be positioned between the first section 606 and the second section 610. In other examples, the angled sections e.g., the first section 606 and the second section 610, may transition directly into each other without a curved transition. In some examples, the shaft 600 may include a tool transition region 604. The first angle 606a, the second angle 610a, and the third angle 612a of the shaft at a gap (e.g., the gap 316 of FIG. 3) may be different in the embodiment of the shaft 600 compared to the embodiments of the shaft illustrated with respect to FIGS. 3-4B and FIG. 5. For example, the first angle 606a may be less than the first angle 504a and the second angle 610a may be less than the second angle 508a, as described with respect to FIG. 5. In one example, the gradual transition 620 may have a length 614. In one example, the length 614 may be shorter than the third axial length 514, as described with reference to FIG. 5.

FIG. 7 shows a further embodiment of a shaft 700 which may be implemented in a liquid metal bearing assembly (e.g., the liquid metal bearing assembly 300 of FIG. 3) with detailed views of angles which are used to form the channel that coupled the liquid metal reservoir to the gap.

The shaft 700 includes a first section 702, a second section 706, a curved transition 704 between the first section 702 and the second section 706, and a third section 714. The shaft 700 includes a first angle 702a and a second angle 706a. The first section 702 includes a first axial length 708. The second section 706 includes a second axial length 712. The second section 706 and the curved transition 704 have a combined axial length 710. The first angle 702a and a second angle 706a of the shaft 700 may be different from the first and second angles of the shaft 304, the shaft 500, and the shaft 600 illustrated with respect to FIGS. 3-4B, FIG. 5, and FIG. 6, respectively. For example, the first angle 702a may be greater than the first angle 504a described with respect to FIG. 5. As another example, the second angle 706a may be greater than the second angle 610a described with respect to FIG. 6. In one example, the shaft 700 includes a cutaway 716.

FIG. 8 shows a detailed view 800 of a section of the liquid metal bearing assembly 300. The detailed view 800 may be similar to second detailed view 348, including additional details of the wetting reservoir 330, the pinning feature 338, and the expansion chamber 342. Particularly, detailed view 800 shows features of the liquid metal bearing assembly that may reduce undesired liquid metal flows from the assembly.

In one example, the third side 336 of the flange 304b may be in face sharing contact along a face 804 of the second body 302b. Flow of the liquid metal beyond the liquid metal interface 340 between the third side 336 and the face 804 may be prevented or reduced by a sharp angle 802, the sharp angle 802 acting as a discontinuity that changes the capillary force after the discontinuity. A first angled cutaway 806 on the third side 336 of the flange 304b and a second angled cutaway 808 on the face 804 of the second body 302b extend annularly in contact to form the sharp angle 802. The sharp angle 802 formed by the line on line transition between the first angled cutaway 806 and second angled cutaway 808 may hold a liquid metal at the intersection of the two sides and may reduce incidence of liquid metal entering lower rotating seals, which may lead to undesired flow due to gas pressure and full wetting of the bearing journal. In one example, the first angled cutaway 806 and the second angled cutaway 808 may be roughly symmetrical and form a sharp point. In another example, two non-symmetrical cutaways may form the sharp point that acts as the pinning feature. In one example, the first angled cutaway 806 and the second angled cutaway 808 meet at an approximately right angle at sharp angle 802. The pinning feature 338 may thus provide fluid pinning and, along with capillary forces, prevent liquid metal from flowing into an expansion chamber 342. In one example, the pinning feature 338 fluidically separates the expansion chamber 342 from the wetting reservoir. As a further example, the pinning feature may be achieved by creating an undercut on a surface. An example of an undercut surface forming a pinning feature is shown in FIG. 18.

The expansion chamber 342 may be formed by the second body 302b of the sleeve 302 and the shaft 304. The expansion chamber 342 may be defined by interior surfaces of the liquid metal bearing assembly 300 that form a void having an annular geometry. For example, a first surface 810 of the second body 302b may form an outer boundary of the expansion chamber 342. A second surface 812 and a fourth surface 830 of the shaft 304 may form an interior boundary of the expansion chamber 342. A third surface 816 of the flange 304b that may be continuous with the first angled cutaway 806 may form an upper boundary of the expansion chamber 342. A notch 814 shapes the first surface 810 towards the first end 306 of the liquid metal bearing assembly 300 and may form the lower boundary of the expansion chamber 342. The expansion chamber 342, which is desirably free of liquid metal, may act as a gas reservoir to retain liquid metal off-gases.

The wetting reservoir 330 may fluidically couple the gap 316 and the liquid metal interface 340 encircling the flange 304b. The wetting reservoir 330 may be formed by the first body 302a of the sleeve 302 and the shaft 304. The wetting reservoir 330 may be defined by interior surfaces of the liquid metal bearing assembly 300 that form a void having an annular geometry. For example, a fourth surface 818 of the first body 302a may form an outer boundary of the wetting reservoir 330. A fifth surface 820 of the shaft 304 may form an interior boundary of the wetting reservoir 330. The fifth surface 820 may be shaped to avoid sharp transitions, where, for example, a floor 822 of the wetting reservoir 330 may be relatively lower, e.g., along the y-axis, than the first side 332 of the flange 304b and gradually incline to the liquid metal interface 340. The shape of the wetting reservoir 330 provides a smooth transition to encourage full wetting of the liquid metal thrust bearing (e.g., liquid metal thrust bearing 224 in FIG. 2). The geometry of the wetting reservoir 330 in combination with the pinning feature 338 retains liquid metal in the gap 316 and the liquid metal interface 340, enabling a sufficient amount of liquid metal to be introduced during field assembly, while minimizing underfilling, and voids in the flow path.

FIG. 9A and FIG. 9B show perspective views of a sleeve which may be implemented in a liquid metal bearing assembly, such as the liquid metal bearing assembly 300 of FIG. 3. In one example, FIG. 9A shows a first perspective view 900 of a sleeve (e.g., sleeve 302) that may be arranged along the second end (e.g., second end 308) of the bearing assembly. FIG. 9B shows a second perspective view 950 of the sleeve that may be arranged along the first end (e.g., first end 306) of the bearing assembly.

Turning first to FIG. 9A, first perspective view 900 of a first side 902 of the sleeve shows an example of a first surface 906 and a second surface 908. The first surface 906 may be joined to the second surface 908 by a step 910. The step 910 may include a sloping (e.g., curved or angled) edge 904. In some examples, the step 910 may be angled (e.g., an angle between 0.5° and 15°) with regard to the rotational axis (e.g., rotational axis 250 in FIG. 2). The angling may, in some examples, reduce incidence of component deformation.

FIG. 9B shows the second perspective view 950 of an example for a second body 952 of the sleeve that may be similar to second body 302b of sleeve 302. Second body 952 includes a first surface 954 and a second surface 956 joined by a first step 962. In one example, the first step 962 may be arranged approximately perpendicular to the first surface 954 and the second surface 956. The second body 952 includes a third surface 958 joined to the second surface 956 by a second step 960. In one example, the second step 960 may be arranged approximately perpendicular to the second surface 956 and the third surface 958. The second step 960 may include a rounded edge 968.

The first surface 954 may include a plurality of through holes 966 defined by an inner cylindrical surface 964, an opening 970 on the first surface 954, and an opening on an opposite surface (e.g., opening 826 on opposite surface 824 in FIG. 8). In one example, a fastener (e.g., bolt 828 in FIG. 8) may be inserted through the through holes 966 for affixing the second body 952 to the first body (e.g., first body 302a) of the sleeve during field assembly.

FIG. 10 shows another embodiment of a sleeve 1000 which may be implemented in a liquid metal bearing assembly such as the liquid metal bearing assembly 300 of FIG. 3. The sleeve 1000 is relatively similar in form and function to the sleeve 302 shown in FIG. 3, FIG. 9A and FIG. 9B.

In one example, internal surfaces of the sleeve 1000 may be variously machined to have different surface finishes. For example, a first region of the sleeve, which is radially surrounded by an interior surface of the shaft, may have a first surface finish. A second region of the sleeve, which is not radially surrounded by the interior surface of the shaft, may have a second surface finish, different from the first surface finish. In one example, a first surface 1002 of sleeve 1000 may include sections that are turned and sections that are ground. As one example, the sleeve 1000 may have a first region 1004 formed with approximate cylindricity for a first length 1006. As another example, a second region 1008 of the first surface 1002 may be ground for a second length 1010 and a third region 1012 may be turned for a third length 1014. The sleeve 1000 along second length 1010 may be formed with uncontrolled cylindricity. A grinding interface 1016 between the second length 1010 and the third length 1014 may produce a step or discontinuity 1018.

The first surface 1002 of the sleeve 1000 may be formed to include a first angle 1024 and a second angle 1022. In one example, the first angle 1024 may be 30° to 60° and the second angle 1022 may range from 0.5° to 15°. In one example, the geometry of the sleeve 1000 may reduce incidence of liquid metal being retained in the liquid metal reservoir (e.g., liquid metal reservoir 312 in FIG. 3, etc.) during field assembly such as during wetting and coating steps of manufacture.

FIG. 11A, FIG. 11B, and FIG. 11C show a first example 1110, a second example 1140, and a third example 1170, respectively, of a liquid metal bearing assembly 1100. The examples for liquid metal bearing assembly 1100 are relatively similar in function to the liquid metal bearing assembly 300 shown in FIG. 3, FIG. 4A, and so on. The first example 1110, the second example 1140, and the third example 1170 illustrate example modifications to the liquid metal bearing assembly 1100 that may increase capillary flow of liquid metal into the bearing journal and facilitate auto-alignment of shaft insertion during field assembly.

Liquid metal bearing assembly 1100 includes shaft 1102, sleeve 1104, a fill reservoir 1106, and a bearing gap 1108. The fill reservoir 1106 may comprise a void formed by interior surfaces of the shaft 1102 and the sleeve 1104. For example, the surfaces may include a first surface 1102a of the shaft 1102 and a second surface 1104a of the sleeve 1104.

FIG. 11A shows the first example 1110 comprising a first modification 1112. The first modification 1112 may be a cutaway from the shaft 1102 that enlarges the fill reservoir 1106.

FIG. 11B shows a second example 1140 comprising the first modification 1112 and a second modification 1142. The second modification 1142 may be a cutaway from the second surface 1104a (e.g., see FIG. 11A) of the sleeve 1104. The second modification 1142 and the first modification 1112 enlarge the fill reservoir 1106 and widen an angle 1144 of the bearing gap 1108.

FIG. 11C shows a third example 1170 comprising a third modification 1172, a fourth modification 1174, a fifth modification 1176, and a sixth modification 1178. The third modification 1172 may be a cutaway from the first modification 1112 (e.g., see FIG. 11A) of the shaft 1102. The fourth modification 1174 and the fifth modification 1176 may be cutaways from the first surface 1102a of the shaft 1102. The sixth modification 1178 may be a cutaway from the second modification 1142 (e.g., see FIG. 11B). The modifications enlarge the fill reservoir 1106 and widen an angle 1180 of the bearing gap 1108.

The example modifications illustrated in FIGS. 11A-11C may have various advantages. For example, by widening the fill reservoir 1106, the modifications allow for sufficient liquid metal filling prior to wetting. As another example, by reducing chamfers in the fill reservoir 1106, the modifications increase capillary flow to the bearing gap 1108. Furthermore, reducing chamfers and other sharp transitions may reduce galling and other wear that may otherwise result between sliding surfaces of the shaft 1102 and the sleeve 1104 during field assembly.

FIG. 12 shows an assembly series 1200 of the liquid metal bearing assembly 300 during insertion of the shaft 304 into the sleeve 302. For example, a first position 1202, a second position 1204 and a third position 1206 of the shaft 304 and sleeve 302 during field assembly are shown. As one example, the matching angles of the sleeve 302 and the shaft 304 align to facilitate assembly. For example, the matching angles may enable auto-alignment of the shaft 304 and the sleeve 302 during field assembly, increasing manufacturing efficiency.

The gradual transition 464 of shaft 304 is shown including the sections formed to have compound angles, e.g., first section 456, second section 460, and third section 462, and the curved transition 458. The second section includes the second angle 460a. A first region 1208 of the first body 302a of the sleeve 302 may be formed having a sleeve angle 1208a that may be the same or similar to the second angle 460a. Dashed lines 1210, 1212 are drawn to illustrate the gap 316 or bearing journal shaft between the shaft 304 and sleeve 302. The second angle 460a and the sleeve angle 1208a may be cutaways from the gap 316.

During assembly, the shaft 304 may inserted into the sleeve 302 from the first end 306. At the first position 1202 during assembly, the shaft 304 approaches the first region 1208 of the sleeve. At the second position 1204, the shaft 304 passes the first region 1208 of the sleeve 302. The second angle 460a and the sleeve angle 1208a being matched and cutaway from the gap 316 enable the shaft 304 and sleeve 302 to slide past one another. As the shaft 304 passes the first region 1208 of the sleeve 302, the distance therebetween narrows to the gap 316. At the third position 1206, the shaft 304 is fully inserted into the sleeve 302. As one example, once fully inserted such that the shaft 304 meets the second end 308 of the assembly, the liquid metal reservoir 312, the channel 314 and the gap 316 may be formed for receiving liquid metal or other bearing lubricant.

FIG. 13 shows a flow chart illustrating an example method 1300 for a liquid metal bearing assembly. In one example, the liquid metal bearing assembly may be the liquid metal bearing assembly 300. In one example, the method 1300 may be executed by an automated system for assembling the liquid metal bearing assembly.

In one example, at 1302, the method 1300 may include coupling a shaft into a sleeve of the liquid metal bearing assembly by inserting the shaft into the sleeve at an opening on a first end of the sleeve. As one example, one or more angled surfaces, or compound angles, of the shaft and matching angle of the sleeve may allow for auto-alignment during assembly.

At 1304, the method 1300 may include coupling a sleeve cap to the first end of the sleeve. As one example, the sleeve cap may be the same or similar to the second body 302b and the first end of the sleeve may be the same or similar to the first body 302a described in FIG. 3 and FIG. 8. As one example, by joining the sleeve cap to the first end of the sleeve, a first reservoir (e.g., a liquid metal reservoir) may be formed at first end of the assembly (e.g., second end 308) and a second reservoir (e.g., a gas reservoir, expansion chamber 342) may be formed at a second end (e.g., first end 306). In addition, when joined, the flange of the shaft and the complementary section of the sleeve form a pinning feature having a sharp angle formed at the interface therebetween. For example, when joined, the sleeve and shaft form the liquid metal reservoir 312, the wetting reservoir 330, the pinning feature 338, and the expansion chamber 342.

At 1306, the method 1300 may include injecting liquid metal into the liquid metal reservoir via a fill port positioned at a second end of the assembly. Liquid metal such as gallium may be one example of a lubricant that may be used as a bearing in the liquid metal bearing assembly. The fill port may be similar to the fill port 310 illustrated in FIG. 3 and others. In one example, an amount of liquid metal may be injected into the liquid metal reservoir that may equal to the volume of the liquid metal reservoir. In some examples, additional injections of liquid metal to the reservoir may be made so that a total volume of injected metal exceeds the volume of the reservoir.

At 1308, the method 1300 may include heating the liquid metal bearing assembly to create bearing surfaces in a gap between the sleeve and shaft whereby the liquid metal flows into the gap using capillary forces. In other words, the liquid metal may be pulled into the gap from the liquid metal reservoir by capillary forces. The capillary forces may pull liquid metal into the gap without heat. In some examples, the liquid metal bearing may not be heated during assembly. As one example, flow of liquid metal into the expansion chamber may be blocked (e.g., reduced, prevented) by the pinning feature formed between the shaft and sleeve.

FIG. 14, FIG. 15, and FIG. 16 show further embodiments of shafts, which may be implemented in the liquid metal bearing assembly (e.g., the liquid metal bearing assembly 300 of FIG. 3) with detailed views of angles, which are used to form the channel that coupled the liquid metal reservoir to the gap. In one example, the dimensions of the further embodiments of the shafts described with respect to FIGS. 14-16 may be within the range of dimensions described with respect to FIGS. 3, 4A-4B.

FIG. 14 shows a shaft 1400. The shaft 1400 includes a first section 1402, a second section 1408, a curved transition 1404 between the first section 1402 and the second section 1408, and a third section 1422. The shaft 1400 includes a first angle 1412, a second angle 1414, and a third angle 1416. The first section 1402 has a first axial length 1410. The second section 1408 has a second axial length 1406. The curved transition 1404 has a transition axial length 1420. The shaft 1400 has a third axial length 1418 including the first section 1402, the second section 1408, the curved transition 1404, and the third section 1422.

In some examples, the first angle 1412, the second angle 1414, and the third angle 1416 may be different from the first, second, and third angles of the various embodiments of shafts illustrated with respect to FIGS. 3-4B, FIG. 5, FIG. 6, and FIG. 7. For example, the first angle 1412 may be smaller than the first angle 504a described with respect to FIG. 5. The first angle 1412 may be larger than the first angle 606a described with respect to FIG. 6. The second angle 1414 may be greater than the second angle 508a described with respect to FIG. 5.

In some examples, the first axial length 1410, the second axial length 1406, the transition axial length 1420, and the third axial length 1418 may be different from the corresponding axial lengths of the various embodiments of shafts illustrated with respect to FIGS. 3-4B, FIG. 5, FIG. 6, and FIG. 7. For example, the first axial length 1410 may be longer than the first axial length 511 described with respect to FIG. 5. The third axial length 1418 may be shorter than the fifth axial length 518 described with respect to FIG. 5. As another example, the first axial length 1410 may be longer than the first axial length 708 described with respect to FIG. 7.

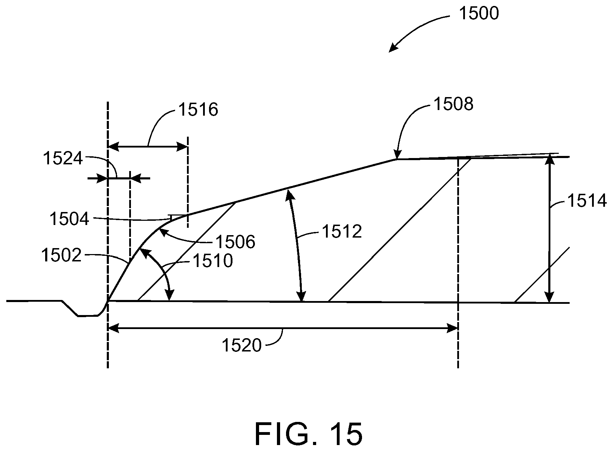

FIG. 15 shows a shaft 1500. The shaft 1500 includes a first section 1502, a second section 1504, a third section 1508, and a curved transition 1506. The shaft 1500 includes a first angle 1510, a second angle 1512, and a third angle 1514. The first section 1502 has a first axial length 1524. The curved transition 1506 and the first section 1502 have a second axial length 1516. The first section 1502, the second section 1504, a portion of the third section 1508, and the curved transition have a third axial length 1520.

In some examples, the first angle 1510, the second angle 1512, and the third angle 1514 may be different from corresponding angles of the various embodiments of shafts illustrated with respect to FIGS. 3-4B, FIGS. 5-7, and FIG. 14. For example, the first angle 1510 may be greater than the first angle 1412 described with respect to FIG. 14. The first angle 1510 may be greater than the first angle 504a described with respect to FIGS. 6. The second angle 1512 may be smaller than the second angle 508a described with respect to FIG. 5.

In some examples, the first axial length 1524, the second axial length 1516, and the third axial length 1520 may be different from the corresponding axial lengths of the various embodiments of shafts illustrated with respect to FIGS. 3-4B, FIG. 5, FIG. 6, and FIG. 7. For example, the first axial length 1524 may be shorter than the first axial length 708 described with respect to FIG. 7. The third axial length 1520 may be longer than the third axial length 1418 described with respect to FIG. 14.

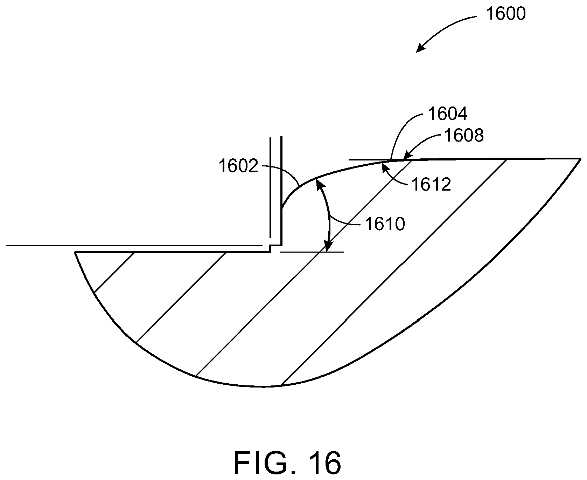

FIG. 16 shows a shaft 1600. The shaft 1600 includes a first section 1602, a second section 1604, and a third section 1608. The shaft 1600 includes a first angle 1610 and a second angle 1612. In some examples, the first angle 1610 and the second angle 1612 may be different from the first and second angles of the various embodiments of shafts illustrated with respect to FIGS. 3-4B, FIGS. 5-7, and FIGS. 14-15. For example, the second angle 1612 may be smaller than the second angle 1414 described with respect to FIG. 14. Shaft 1600 does not include a curved transition (e.g., the curved transition 1404 in FIG. 14) between the first angle 1610 and the second angle 1612. In other examples, the shaft 1600 may include a curved transition between the first angle 1610 and the second angle 1612.

FIG. 17 shows an example of a liquid metal bearing assembly 1700. The liquid metal bearing assembly 1700 is a configuration for the disclosed liquid metal bearing wherein components are arranged in an alternative orientation (e.g., contrasting with the orientation of components in FIG. 3). In the example, a fill port and pinning feature may be in an opposite orientation such that the fill port and angles creating the reservoir and entrance to the gap are on the seal side of the bearing, e.g., a first end 1706, and the pinning feature is on the opposite end of the shaft with the sleeve, e.g., a second end 1708.

The liquid metal bearing assembly 1700 includes a sleeve 1702 and a shaft 1704. In one example, the sleeve 1702 may be a rotational component and the shaft 1704 may be a stationary component. The sleeve 1702 and the shaft 1704 may be coupled such that the sleeve 1702 is rotatable relative to the shaft 1704. The sleeve 1702 of the liquid metal bearing assembly 1700 may be formed of a first body 1702a and a second body (not shown, e.g., 302b in FIG. 3). A body 1704a of the shaft 1704 is configured with a flange 1704b which radially extends from the body 1704a of the shaft 1704. The first body 1702a of the sleeve 1702 is configured with a complementary section 1722 in which the flange 1704b may be positioned.

Each of the sleeve 1702 and the shaft 1704 are configured with structures that form a liquid metal flow path during conditions in which the liquid metal bearing assembly 1700 is assembled. The liquid metal flow path may include a fill port 1710, a first reservoir 1712 (e.g., a liquid metal reservoir, gallium reservoir), a channel 1714, and a gap 1716. Liquid metal may be introduced to the first reservoir 1712 via the fill port 1710 during assembly. The channel 1714 may include angles to promote flow from the first reservoir 1712 into the gap 1716. The fill port 1710, the first reservoir 1712, and the channel 1714 are arranged at the first end 1706 of the liquid metal bearing assembly 1700.

The sleeve 1702 includes a pinning feature comprising a sleeve element 1752 and a shaft element 1750. The sleeve element 1752 and the shaft element 1750 reduce gallium flow into undesired areas of the liquid metal bearing assembly 1700 by pinning the gallium in the gap 1716. The sleeve element 1752 and the shaft element 1750 are arranged at the second end of the liquid metal bearing assembly 1700.

During assembly of the liquid metal bearing assembly 1700, the shaft 1704 is inserted into the first body 1702a of the sleeve 1702 from the first end 1706. When the flange 1704b is positioned in the complementary section 1722 (e.g., as shown in FIG. 17), the second body of the sleeve 1702 may be coupled to the first body 1702a at the first end 1706 to enclose the shaft 1704 in the sleeve 1702. The first body 1702a and the second body may be coupled via bolts, welding, other fasteners, etc. As one example, the second body may be a sleeve cap. In this way the fill port 1710 and the first reservoir 1712 are arranged on the seal side of the bearing and the pinning feature is arranged on an opposing end of the bearing between the shaft 1704 and the sleeve 1702.

FIG. 18 shows an example of a liquid metal bearing assembly 1800. The liquid metal bearing assembly 1800 is a configuration for the disclosed liquid metal bearing showing additional or alternative pinning features. The liquid metal bearing assembly 1800 may in other ways be the same or similar to the examples of the liquid metal bearing assembly described above with respect to FIGS. 2-17.

The liquid metal bearing assembly 1800 includes a sleeve 1802 and a shaft 1804. In one example, the sleeve 1802 may be a rotational component and the shaft 1804 may be a stationary component. The sleeve 1802 and the shaft 1804 may be coupled such that the sleeve 1802 is rotatable relative to the shaft 1804. The sleeve 1802 of the liquid metal bearing assembly 1800 may be formed of a first body 1802a and a second body (not shown, e.g., 302b in FIG. 3). A body 1804a of the shaft 1804 is configured with a flange 1804b that radially extends from the body 1804a of the shaft 1804. The first body 1802a of the sleeve 1802 is configured with a complementary section 1814 in which the flange 1804b may be positioned.

A gap 1816 is formed between the sleeve 1802 and the shaft 1804. Liquid metal introduced during assembly may fill the gap 1816. Liquid metal may be prevented from flowing past the gap 1816 by a pinning feature separating the gap 1816 from a gas reservoir indicated by arrows 1806. The placement and geometry of the pinning feature may contribute to reducing an amount of liquid metal that may undesirably flow to lower rotating seals and reservoirs within the bearing outside of the journal surfaces. In the example, a first pinning feature 1824 and a second pinning feature 1834 are shown in the same bearing assembly. However, it may be understood that a manufactured bearing assembly may include just one of the first pinning feature 1824, the second pinning feature 1834, the pinning feature 338, or other similar configurations.

The first pinning feature 1824 comprises a first sleeve element 1820 and a first shaft element 1822. The first pinning feature 1824 is an example where two non-symmetrical cutaways may be used to pin liquid metal in the gap 1816. For example, the first shaft element 1822 may be created by an asymmetric cutaway on a first surface 1826, whereas the first sleeve element 1820 may have no such cutaway. In one example, the asymmetric cutaway on the first surface 1826 may form a sharp angle (e.g., a 45° angle).

Alternatively, the pinning feature may be achieved by creating an undercut on a surface. For example, the second pinning feature 1834 comprises a second sleeve element 1830 and a second shaft element 1832. The second sleeve element 1830 may be created by an undercut on a second surface 1836 and the second shaft element 1832 may be created by a matching, symmetric undercut on a third surface 1838. In one example, the undercut on the second surface 1836 may form a sharp angle (e.g., a 45° angle) and the undercut on the third surface 1838 may form a similar sharp angle in a symmetric orientation.

Some examples of the disclosed liquid metal bearing assembly may comprise more than one fill port, more than liquid metal reservoir, and/or more than one pinning feature. For example, there may be multiple fill ports located at different axial and radial positions. Similarly, in some examples, the assembly may comprise more than one pinning feature. In some examples, the disclosed liquid metal bearing assembly may include one or more of each of the fill port, the pinning feature, and the liquid metal reservoir. For example, there may be a first liquid metal reservoir positioned at a first end of the bearing, an associated first fill port, and an associated first pinning feature. On a second end of the bearing at a different axial position, there may be a second liquid metal reservoir, an associated second fill port, and an associated second pinning feature. In some examples, the first pinning feature may be shaped differently from the second pinning feature, and in other examples, they may be shaped similarly. For example, the first pinning feature may be similar to the pinning feature described with reference to FIG. 8 and the second pinning feature may be similar to the first or second pinning feature described with reference to FIG. 18.

In this way, the disclosed liquid metal bearing assembly addresses current challenges related to manufacture of liquid metal bearings by encouraging good capillary wetting and liquid metal retention. The geometry of the disclosed liquid metal bearing assembly reduces the difficulty of alignment, enabling self-alignment during the assembly process, thereby increasing yield and reducing capacity constraints during manufacture. By reducing difficulty of alignment, the disclosed liquid metal bearing assembly may reduce reliance on lubricants used during assembly that in some examples may contaminate the liquid metal and interfere with a lubricating ability of the liquid metal. Further, the disclosed liquid metal bearing assembly encourages full wetting with liquid metal and reduces an amount of liquid metal that may undesirably flow within the bearing outside of the journal surfaces by strategic application of capillary forces. A technical effect of using a liquid metal reservoir in a liquid metal bearing is to allow a precise amount of liquid metal to be delivered to the bearing interface as well as reduce an amount of gas in the bearing interface.

When introducing elements of various embodiments of the present disclosure, the articles "a," "an," and "the" are intended to mean that there are one or more of the elements. The terms "first," "second," and the like, do not denote any order, quantity, or importance, but rather are used to distinguish one element from another. The terms "comprising," "including," and "having" are intended to be inclusive and mean that there may be additional elements other than the listed elements. As the terms "connected to," "coupled to," etc. are used herein, one object (e.g., a material, element, structure, member, etc.) can be connected to or coupled to another object regardless of whether the one object is directly connected or coupled to the other object or whether there are one or more intervening objects between the one object and the other object. In addition, it should be understood that references to "one embodiment" or "an embodiment" of the present disclosure are not intended to be interpreted as excluding the existence of additional embodiments that also incorporate the recited features. As described herein "approximately" and "substantially" refer to values of within plus or minus five percent, unless otherwise noted.

As used herein, the examples and embodiments, in all respects, are meant to be illustrative only and should not be construed to be limiting in any manner. The current invention is defined by the appended claims.

## Claims

1. A liquid metal bearing (300), comprising:
a channel (314) fluidly coupling a liquid metal reservoir (312) to a gap (316) between a sleeve (302) and a shaft (304), wherein the sleeve and the shaft form the liquid metal reservoir;
the channel having a first section (314a) sloped at a first angle, and a second section (314c) sloped at a second angle, wherein the first angle is different from the second angle.

2. The liquid metal bearing of claim 1, wherein the first section (314a) has a first length and the second section (314c) has a second length, different from the first length.

3. The liquid metal bearing of claim 1, wherein the liquid metal reservoir (312) has a first volume and the gap (316) has a second volume greater than or equal to the first volume.

4. The liquid metal bearing of claim 1, further comprising a fill port (310) with a first end opening into the liquid metal reservoir (312) and a second end including a plug.

5. The liquid metal bearing of claim 1, further comprising a pinning feature (338) at an interface of a flange (304b) of the shaft (304) and a complementary section of the sleeve (302), wherein the pinning feature separates the gap from an expansion chamber (342) formed between the sleeve and the shaft.

6. The liquid metal bearing of claim 1, further comprising a curved transition section (314b) positioned between the first section and the second section.

7. The liquid metal bearing of claim 1, wherein the gap (316) has a third angle, different from the first angle and the second angle.

8. The liquid metal bearing of claim 1, further comprising a wetting reservoir (330) fluidly coupled to the liquid metal reservoir (312) by the gap (316), wherein the wetting reservoir is fluidically separated from an expansion chamber by a pinning feature.

9. A method for assembling a liquid metal bearing according to any one of claims 1-8, the method comprising:
inserting a shaft into a sleeve (1304), such that a first reservoir is formed at a first end of the bearing between the shaft and the sleeve, a second reservoir is formed at a second end of the bearing between the shaft and the sleeve, and a gap is formed between the first reservoir and the second reservoir, wherein the gap is separated from the second reservoir by a pinning feature;
inserting a lubricant into the first reservoir via a fill port (1306); and
flowing the lubricant from the first reservoir into the gap using capillary forces (1308).

10. The method of claim 9, wherein the flowing comprises heating the shaft and the sleeve to flow the lubricant from the first reservoir into the gap (1308).

11. The method of claim 9, wherein the lubricant is a first volume of gallium and the first volume of gallium is pulled into the gap from the first reservoir by capillary forces (1306).

12. The method of claim 11, wherein the first volume of gallium is less than or equal to a volume of the first reservoir (1306).

13. The method of claim 9, further comprising grinding surfaces of the shaft and internal surfaces of the sleeve such that the first reservoir and the gap have a first surface finish (1004) and the second reservoir has a second surface finish (1008), different from the first surface finish.

14. The method of claim 9, further comprising wetting or anti-wetting surfaces of the shaft and internal surfaces of the sleeve.

## Patentansprüche

1. Flüssigmetalllager (300), umfassend:
einen Kanal (314), der ein Flüssigmetallreservoir (312) mit einem Spalt (316) zwischen einer Hülse (302) und einem Schaft (304) fluidisch verbindet, wobei die Hülse und der Schaft das Flüssigmetallreservoir bilden;
wobei der Kanal einen ersten Abschnitt (314a), der in einem ersten Winkel geneigt ist, und einen zweiten Abschnitt (314c) aufweist, der in einem zweiten Winkel geneigt ist, wobei der erste Winkel von dem zweiten Winkel verschieden ist.

2. Flüssigmetalllager nach Anspruch 1, wobei der erste Abschnitt (314a) eine erste Länge und der zweite Abschnitt (314c) eine zweite Länge aufweist, die von der ersten Länge verschieden ist.

3. Flüssigmetalllager nach Anspruch 1, wobei das Flüssigmetallreservoir (312) ein erstes Volumen aufweist, und der Spalt (316) ein zweites Volumen aufweist, das größer oder gleich dem ersten Volumen ist.

4. Flüssigmetalllager nach Anspruch 1, weiterhin umfassend einen Befüllanschluss (310) mit einer ersten Endöffnung in das Flüssigmetallreservoir (312) und ein zweites Ende mit einem Stopfen aufweist.

5. Flüssigmetalllager nach Anspruch 1, weiterhin umfassend ein Verstiftungsmerkmal (338) an einer Schnittstelle eines Flanschs (304b) des Schafts (304) und einen komplementären Abschnitt der Hülse (302), wobei das Verstiftungsmerkmal den Spalt von einer zwischen der Hülse und dem Schaft gebildeten Ausdehnungskammer (342) trennt.

6. Flüssigmetalllager nach Anspruch 1, weiterhin umfassend einen gebogenen Übergangsabschnitt (314b), der zwischen dem ersten Abschnitt und dem zweiten Abschnitt positioniert ist.

7. Flüssigmetalllager nach Anspruch 1, wobei der Spalt (316) einen dritten Winkel aufweist, der von dem ersten Winkel und dem zweiten Winkel verschieden ist.

8. Flüssigmetalllager nach Anspruch 1, weiterhin umfassend ein Benetzungsreservoir (330), das durch den Spalt (316) mit dem Flüssigmetallreservoir (312) fluidisch verbunden ist, wobei das Benetzungsreservoir durch ein Verstiftungsmerkmal von einer Ausdehnungskammer fluidisch getrennt ist.

9. Verfahren zur Montage eines Flüssigmetalllagers nach einem der Ansprüche 1 bis 8, wobei das Verfahren Folgendes umfasst:
Einführen eines Schafts in eine Hülse (1304), so dass ein erstes Reservoir an einem ersten Ende des Lagers zwischen dem Schaft und der Hülse gebildet wird, wobei ein zweites Reservoir an einem zweiten Ende des Lagers zwischen dem Schaft und der Hülse gebildet wird, und ein Spalt zwischen dem ersten Reservoir und dem zweiten Reservoir gebildet wird, wobei der Spalt von dem zweiten Reservoir durch ein Verstiftungsmerkmal getrennt ist;
Einbringen eines Schmiermittels über einen Befüllanschluss (1306) in das erste Reservoir; und
Fließenlassen des Schmiermittels von dem ersten Reservoir unter Verwendung von Kapillarkräften (1308) in den Spalt.

10. Verfahren nach Anspruch 9, wobei das Fließenlassen das Erwärmen des Schafts und der Hülse umfasst, um das Schmiermittel von dem ersten Reservoir in den Spalt (1308) fließen zu lassen.

11. Verfahren nach Anspruch 9, wobei das Schmiermittel sich in einem ersten Volumen von Gallium befindet, und das erste Volumen von Gallium durch Kapillarkräfte (1306) aus dem ersten Reservoir in den Spalt gezogen wird.

12. Verfahren nach Anspruch 11, wobei das erste Volumen von Gallium kleiner als oder gleich einem Volumen des ersten Reservoirs (1306) ist.

13. Verfahren nach Anspruch 9, weiterhin umfassend das Schleifen der Flächen des Schafts und der Innenflächen der Hülse, so dass das erste Reservoir und der Spalt eine erste Oberflächenqualität (1004) aufweisen, und das zweite Reservoir eine zweite Oberflächenqualität (1008) aufweist, die von der ersten Oberflächenqualität verschieden ist.

14. Verfahren nach Anspruch 9, weiterhin umfassend Benetzungs- oder Anti-Benetzungsflächen des Schafts und der Innenflächen der Hülse.

## Revendications

1. Palier à métal liquide (300), comprenant :
un canal (314) couplant de manière fluidique un réservoir de métal liquide (312) à un intervalle(316) entre un manchon (302) et un arbre (304), le manchon et l'arbre formant le réservoir de métal liquide ;
le canal présentant une première section (314a) inclinée selon un premier angle, et une seconde section (314c) inclinée selon un deuxième angle, le premier angle étant différent du deuxième angle.

2. Palier à métal liquide selon la revendication 1, dans lequel la première section (314a) a une première longueur et la seconde section (314c) a une seconde longueur, différente de la première longueur.

3. Palier à métal liquide selon la revendication 1, dans lequel le réservoir de métal liquide (312) a un premier volume et l'intervalle (316) a un second volume supérieur ou égal au premier volume.

4. Palier à métal liquide selon la revendication 1, comprenant en outre un orifice de remplissage (310) avec une première extrémité s'ouvrant dans le réservoir de métal liquide (312) et une seconde extrémité comprenant un bouchon.

5. Palier à métal liquide selon la revendication 1, comprenant en outre un élément d'ancrage (338) à une interface d'une bride (304b) de l'arbre (304) et d'une section complémentaire du manchon (302), l'élément d'ancrage séparant l'intervalle d'une chambre d'expansion (342) formée entre le manchon et l'arbre.

6. Palier à métal liquide selon la revendication 1, comprenant en outre une section de transition courbe (314b) positionnée entre la première section et la seconde section.

7. Palier à métal liquide selon la revendication 1, dans lequel l'intervalle (316) a un troisième angle, différent du premier angle et du deuxième angle.

8. Palier à métal liquide selon la revendication 1, comprenant en outre un réservoir de mouillage (330) couplé de manière fluidique au réservoir de métal liquide (312) par l'intervalle (316), le réservoir de mouillage étant séparé de manière fluidique d'une chambre d'expansion par un dispositif d'épinglage.

9. Procédé d'assemblage d'un palier à métal liquide selon l'une quelconque des revendications 1 à 8, le procédé comprenant :
l'insertion d'un arbre dans un manchon (1304), de sorte qu'un premier réservoir soit formé à une première extrémité du palier entre l'arbre et le manchon, qu'un second réservoir soit formé à une seconde extrémité du palier entre l'arbre et le manchon, et qu'un intervalle soit formé entre le premier réservoir et le second réservoir, l'intervalle étant séparé du second réservoir par un dispositif d'épinglage ;
l'insertion d'un lubrifiant dans le premier réservoir par un orifice de remplissage (1306) ; et
l'écoulement du lubrifiant du premier réservoir dans l'intervalle au moyen de forces capillaires (1308).

10. Procédé selon la revendication 9, dans lequel l'écoulement comprend le chauffage de l'arbre et du manchon pour faire couler le lubrifiant du premier réservoir dans l'intervalle (1308).

11. Procédé selon la revendication 9, dans lequel le lubrifiant est un premier volume de gallium et le premier volume de gallium est attiré dans l'intervalle depuis le premier réservoir par des forces capillaires (1306).

12. Procédé selon la revendication 11, dans lequel le premier volume de gallium est inférieur ou égal à un volume du premier réservoir (1306).

13. Procédé selon la revendication 9, comprenant en outre le meulage des surfaces de l'arbre et des surfaces internes du manchon de telle sorte que le premier réservoir et l'intervalle aient un premier fini de surface (1004) et que le second réservoir ait un second fini de surface (1008), différent du premier fini de surface.

14. Procédé selon la revendication 9, comprenant en outre le mouillage ou l'anti-mouillage des surfaces de l'arbre et des surfaces internes du manchon.
